(19) Europäisches Patentamt
European Patent Office
Office européen des brevets

(11) **EP 3 209 993 B1**

(12) **FASCICULE DE BREVET EUROPEEN**

(45) Date de publication et mention
de la délivrance du brevet:
**29.01.2020 Bulletin 2020/05**

(21) Numéro de dépôt: **15793872.1**

(22) Date de dépôt: **15.10.2015**

(51) Int Cl.:
*G01M 15/14* (2006.01)     *G01H 1/00* (2006.01)
*G01B 7/14* (2006.01)     *G01B 11/14* (2006.01)
*G05B 23/02* (2006.01)

(86) Numéro de dépôt international:
**PCT/FR2015/052774**

(87) Numéro de publication internationale:
**WO 2016/062946 (28.04.2016 Gazette 2016/17)**

(54) **PROCÉDÉ ET DISPOSITIF DE SURVEILLANCE D'UNE ROUE AUBAGÉE DE MOTEUR D'AÉRONEF PAR MESURE DE POSITION D'ÉQUILIBRE**

VERFAHREN UND VORRICHTUNG ZUR ÜBERWACHUNG VON EINER FLUGZEUGSTURBINESCHAUFEL DURCH MESSUNG EINER GLEICHGEWICHTPOSITION

METHOD AND DEVICE FOR THE MONITORING OF A VANE PROPELLER OF AN AIRCRAFT ENGINE BY MEASURING AN EQUILIBRIUM POSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2014 FR 1460167**

(43) Date de publication de la demande:
**30.08.2017 Bulletin 2017/35**

(73) Titulaire: **SAFRAN AIRCRAFT ENGINES**
**75015 Paris (FR)**

(72) Inventeurs:
• **NICQ, Geoffroy**
**F-77550 Moissy-Cramayel Cedex (FR)**
• **GEREZ, Valerio**
**F-77550 Moissy-Cramayel Cedex (FR)**

(74) Mandataire: **Brevalex**
**56, Boulevard de l'Embouchure**
**B.P. 27519**
**31075 Toulouse Cedex 2 (FR)**

(56) Documents cités:
**EP-A2- 2 781 897     GB-A- 2 485 891**

## Description

## DOMAINE TECHNIQUE

La présente invention concerne le domaine de la surveillance d'une roue aubagée d'un moteur d'aéronef. Une telle surveillance est mise en œuvre par exemple pour détecter un endommagement d'une pale de la roue.

## ÉTAT DE LA TECHNIQUE ANTÉRIEURE

Un moteur d'aéronef comporte plusieurs roues aubagées. Une roue aubagée peut être dégradée, par exemple suite à un choc d'un objet contre une pale de la roue, ou suite à un changement des conditions aérodynamiques auxquelles la roue aubagée est soumise.

On connaît dans l'art antérieur différents procédés pour détecter un endommagement d'une roue aubagée d'un moteur d'aéronef. Ces procédés mettent en œuvre une détection des instants de passage des pales, également nommées aubes. On utilise généralement le terme anglais « tip timing » pour désigner une telle opération. A partir de ces instants de passage, on reconstruit un signal de vibration pour chaque pale. L'analyse de la fréquence de vibration permet de repérer un endommagement d'une pale. La mise en œuvre de ces procédés impose l'utilisation d'un grand nombre de capteurs, afin de disposer d'un échantillonnage suffisant du mouvement des pales. Un tel procédé et système est divulgué dans le brevet GB 2485891 A.

Un objectif de la présente invention est de proposer un procédé et un dispositif pour surveiller une roue aubagée de moteur d'aéronef, permettant de détecter rapidement un endommagement d'une pale à l'aide d'un nombre réduit de capteurs.

## EXPOSÉ DE L'INVENTION

Cet objectif est atteint avec un procédé de surveillance d'une roue aubagée d'un moteur d'aéronef, comprenant :

- une acquisition d'au moins un signal temporel, chaque signal temporel étant relatif à des instants de passage des pales de la roue aubagée devant un capteur; et
- une détermination d'une phase de vol courante de l'aéronef;
- pour chaque vol d'une série de vols de l'aéronef, mise en correspondance d'au moins une partie de chaque signal temporel avec une phase de vol prédéterminée d'un ensemble de phases de vol prédéterminées comprenant au moins une phase de vol prédéterminée ; et
- pour chaque pale, pour chaque vol de ladite série de vols de l'aéronef, et pour chaque phase de vol prédéterminée, mesure d'une première position d'intérêt égale à la position moyenne du sommet de la pale, dite position d'équilibre.

Certains aspects préférés mais non limitatifs de ce procédé sont les suivants :

- il comprend une mesure d'une première position d'intérêt pour chaque pale, pour chaque vol, et pour au moins deux phases de vol prédéterminées ;
- il comprend un calcul, pour chaque pale, et pour chaque phase de vol prédéterminée, d'une deuxième position d'intérêt égale à la valeur moyenne ou la valeur médiane de positions d'équilibre associées chacune à un parmi plusieurs vols de l'aéronef ;
- il comprend une comparaison entre une position de référence et une position d'intérêt, afin de détecter l'apparition d'un endommagement sur la pale ;
- il comprend un suivi des positions d'intérêt au cours des vols, afin de détecter un décalage progressif de ces positions d'intérêt ;
- on mesure la position d'équilibre d'une pale à l'aide d'un unique capteur, agencé pour détecter le passage d'un sommet d'une pale de la roue aubagée en un point prédéterminé ;
- il comprend une recherche d'une anomalie d'une chaîne d'acquisition de l'au moins un signal temporel, ladite recherche mettant en œuvre une mesure de l'écart entre les extrema d'un ensemble de positions d'équilibre associées à une même pale et une même phase de vol prédéterminée, les positions d'équilibre dudit ensemble correspondant chacune à un parmi plusieurs vols de l'aéronef ;
- il comprend une étape préalable de détermination par expertise de l'ensemble de phases de vol prédéterminées, une phase de vol prédéterminée correspondant, au niveau de chaque pâle, à une pression statique sur la pâle et à une vitesse de rotation de cette pâle qui induisent un mode de fonctionnement critique de la pale.

L'invention n'est pas limitée à ce procédé, mais s'étend également à un dispositif apte à mettre en œuvre ce procédé, et en particulier à un dispositif de surveillance d'une roue aubagée d'un moteur d'aéronef, comprenant :

- au moins un capteur, chaque capteur étant agencé pour acquérir un signal temporel relatif à des instants de passage des pales de la roue aubagée devant le capteur ; et
- des moyens de détermination d'une phase de vol courante de l'aéronef;

Le dispositif comprend des moyens de traitement du signal, agencés pour :

- mettre en correspondance au moins une partie de chaque signal temporel avec une phase de vol prédéterminée d'un ensemble de phases de vol prédéterminées comprenant au moins une phase de vol prédéterminée ; et

- mesurer, pour chaque pale, pour au moins un vol, et pour chaque phase de vol prédéterminée, une première position d'intérêt égale à la position moyenne du sommet de la pale, dite position d'équilibre ; et
- fournir en sortie lesdites premières positions d'intérêt.

## BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- la figure 1 illustre de manière schématique un premier mode de réalisation du procédé selon l'invention ;
- la figure 2A illustre de manière schématique l'acquisition d'un signal temporel relatif à des instants de passage des pales d'un moteur d'aéronef devant un capteur ;
- la figure 2B illustre le signal temporel acquis par le capteur représenté en figure 2A ;
- les figures 3A à 3C illustrent la mesure d'une position d'équilibre d'une pale, à partir d'un signal temporel du type de celui représenté en figure 2B;
- la figure 4 illustre de manière schématique un deuxième mode de réalisation du procédé selon l'invention ;
- la figure 5 illustre de manière schématique un troisième mode de réalisation du procédé selon l'invention ;
- la figure 6 illustre des mesures obtenues à l'aide d'un procédé selon l'invention ;
- la figure 7 illustre de manière schématique un quatrième mode de réalisation du procédé selon l'invention ;
- la figure 8 illustre de manière schématique un premier mode de réalisation du dispositif selon l'invention ;
- la figure 9 illustre de manière schématique un deuxième mode de réalisation du dispositif selon l'invention ;
- la figure 10 illustre de manière schématique un troisième mode de réalisation du dispositif selon l'invention.

## EXPOSÉ DÉTAILLÉ DE MODES DE RÉALISATION PARTICULIERS

On s'intéresse selon l'invention à l'évolution temporelle de la position d'une pale, dans le référentiel de la roue. On s'intéresse en particulier à l'évolution temporelle de la position du sommet d'une pale relativement au centre de rotation de la roue. Dans tout le texte, on nomme « mouvement d'une pale » cette évolution de la position d'une pale en fonction du temps.

On définit une composante statique et une composante dynamique du mouvement d'une pale. La composante dynamique correspond à une vibration de la pale autour d'une position centrale dite position d'équilibre. La composante statique correspondant à un décalage de cette position d'équilibre.

L'idée à l'origine de l'invention consiste à détecter l'endommagement d'une pale en s'intéressant non plus à la composante dynamique du mouvement de cette pale, mais à sa composante statique uniquement.

L'étude de la composante statique du mouvement de la pale donne accès à de nouvelles informations sur les pales, sans que cela ne nécessite un échantillonnage haute fréquence et donc de grandes puissances de calcul. En outre, et comme expliqué plus en détail dans la suite, un nombre réduit de capteurs permet d'accéder à des données fiables sur cette composante statique.

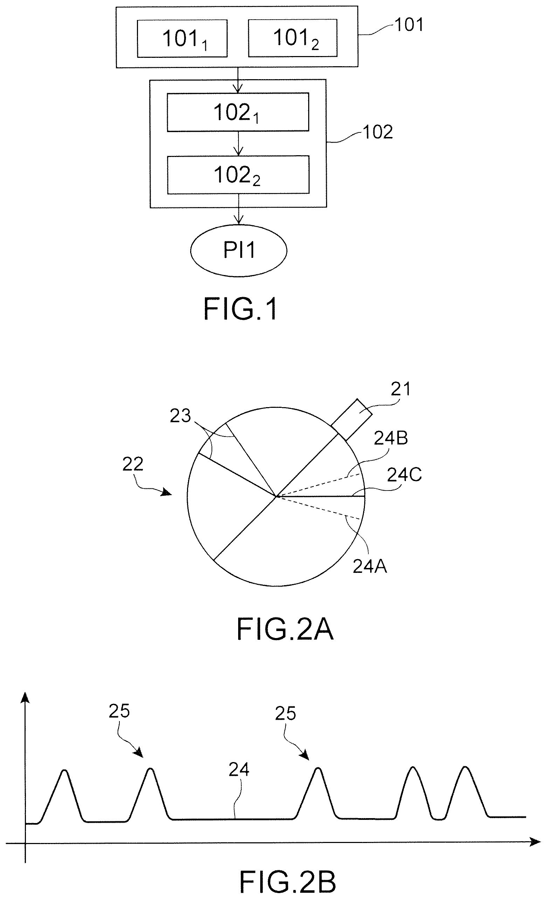

La figure 1 illustre de manière schématique un premier mode de réalisation du procédé selon l'invention, mis en œuvre pour surveiller une roue aubagée d'un moteur d'aéronef.

On a illustré les étapes mises en œuvre pour l'un parmi plusieurs vols d'une série de vols de l'aéronef, et pour une phase de vol prédéterminée. Les vols d'une même série de vols ne sont pas nécessairement consécutifs.

Ces étapes sont mises en œuvre tour à tour au cours de chacun des vols de ladite série de vols. Pour chaque vol, ces étapes sont mises en œuvre pour une ou plusieurs phase(s) de vol prédéterminée(s) par expertise au cours d'une étape préalable du procédé selon l'invention.

Une phase de vol prédéterminée correspond, au niveau de chaque pâle, à une pression statique sur la pâle et à une vitesse de rotation de cette pâle qui induisent un mode de fonctionnement critique de la pale. Ces grandeurs ne pouvant être directement mesurées, des phases de vol « critiques » sont déterminées en fonction des paramètres de fonctionnement du moteur (plage de vitesses de rotation de la roue aubagée par exemple) et des paramètres de l'environnement de moteur (température, altitude par exemple). Cette détermination est réalisée par des experts. Ainsi sont obtenues les phases de vol prédéterminées qui peuvent notamment comprendre une phase d'accélération, une phase de décélération, une phase d'inversion de poussée (ou reverse). Ensuite on détecte les phases de vol prédéterminées dans les phases de vol courantes en fonction des paramètres de fonctionnement du moteur ou de son environnement.

Au cours d'une première étape 101,

- on acquiert, pour chaque capteur tel que défini par la suite, un signal temporel représentatif des instants de passage de chacune des pales de la roue aubagée devant ce capteur (sous-étape $101_1$) ; et

- on détermine la phase de vol courante de l'aéronef (sous-étape $101_2$).

Au cours d'une première sous-étape $102_1$ d'une deuxième étape 102, on associe une phase de vol prédéterminée à au moins une partie de chaque signal temporel. On peut parler d'une étape d'indexation, au cours de laquelle on attribue à un signal, une information relative à la phase de vol correspondante.

Le procédé peut comprendre une détection du début et de la fin de la phase de vol prédéterminée, de façon à piloter l'enregistrement du signal temporel uniquement entre ces deux instants.

Le procédé peut comprendre une sélection d'au moins une partie d'un signal temporel acquis et enregistré, cette partie correspondant à ladite phase de vol prédéterminée.

Ensuite, au cours d'une deuxième sous-étape $102_2$ de la deuxième étape 102, on détermine une position moyenne de chaque pale. Chaque position moyenne est donc associée à une pale, un vol, et une phase de vol. La position moyenne d'une pale désigne une position d'un point fixe de la pale, relativement à une référence, et moyennée temporellement. Le point fixe est ici le sommet de la pale, c'est-à-dire l'extrémité de la pale opposée au centre de rotation de la roue aubagée.

En d'autres termes, la position instantanée du sommet d'une pale est la position de ce point, mesurée par un capteur et pour une rotation donnée de la roue aubagée, et la position moyenne du sommet d'une pale est la moyenne de plusieurs positions instantanées, mesurées pour différentes rotations de la roue aubagée, et par un ou plusieurs capteurs.

La position est en particulier une position angulaire, sur un disque centré sur le centre de rotation de la roue aubagée. La moyenne temporelle est réalisée sur un petit intervalle de temps, par exemple inférieur à 2 minutes. La moyenne temporelle peut être réalisée sur un seul intervalle temporel, ou sur plusieurs intervalles temporels discontinus relatifs tous au même vol et à la même phase de vol. Par exemple, la moyenne temporelle est réalisée sur 5 à 10 intervalles temporels chacun d'une durée comprise entre 1 s et 30 s, par exemple 10 s.

La position moyenne d'une pale est également nommée position d'équilibre de la pale, et forme une première position d'intérêt, notée PI1.

Une modification soudaine ou progressive de la position d'équilibre d'une pale est provoquée notamment par :

- une déformation plastique de la pale, consécutivement à l'impact d'un corps étranger. Par exemple, la pale se plie en réaction à l'absorption du choc produit par la rencontre de la pale et de ce corps étranger. La déformation peut dépendre des conditions de vol, et varier en fonction de la phase de vol. ; ou
- une modification de la position angulaire de l'ensemble de la pale, relativement au centre de rotation de la roue aubagée. Pour une pale assemblée selon une attache en marteau, un tel décalage peut provenir d'un glissement du pied de la pale dans son alvéole, chaque pied de pale étant logé dans une alvéole dédiée. Pour une pale assemblée selon une attache brochée, un tel décalage peut provenir d'un glissement du pied de pale dans une rainure circonférentielle s'étendant sur toute la périphérie d'un disque central de la roue aubagée.

La position d'équilibre d'une pale est donc un indicateur permettant de détecter de manière simple et rapide l'apparition d'un endommagement sur une pale. On ne cherche pas à connaître la fréquence de vibration de la pale. On s'affranchit ainsi des limitations et difficultés de l'art antérieur, notamment relatives à l'utilisation d'un grand nombre de capteurs répartis sur toute la circonférence de rotation de la pale, par exemple sur une surface interne d'un carter ou carénage.

De préférence, pour chaque vol, et pour chaque pale, on mesure des positions d'équilibre relatives à différentes phases de vol de l'aéronef. En effet, certains endommagements de la roue aubagée peuvent n'être mis en évidence que sous certaines conditions de fonctionnement de la roue aubagée.

La figure 2A illustre de manière schématique l'acquisition d'un signal temporel relatif à des instants de passage des pales d'un moteur d'aéronef devant un capteur.

On a illustré en figure 2A le cas d'un unique capteur 21, disposé en périphérie d'une roue aubagée 22 présentant ici cinq pales 23. La roue aubagée peut être celle d'une soufflante, d'un compresseur haute pression, ou de tout autre élément d'un moteur d'aéronef.

L'invention n'est cependant pas limitée à un tel agencement, et peut impliquer plusieurs capteurs, par exemple au moins trois capteurs. Les plusieurs capteurs sont alors avantageusement répartis de façon irrégulière sur un carter entourant la roue.

Le capteur 21 peut être un capteur à courants de Foucault, ou un capteur de type capacitif, ou optique, ou tout autre capteur robuste, précis, et peu encombrant. On nomme un tel capteur un capteur « tip-timing », car il détecte des instants de passage relativement à une base de temps.

Le capteur 21 est disposé en périphérie de la roue aubagée 22, et pointe vers le centre de rotation de la roue aubagée 22. Il détecte le passage des sommets des pales 23 et repère les instants de passage relativement à une base de temps.

Une pale vibre par exemple entre deux positions extrêmes 24A et 24B, entre lesquelles se trouve sa position d'équilibre 24C.

La figure 2B illustre le signal temporel 24 acquis par le capteur 21 de la figure 2A. L'axe des abscisses est un axe des temps. L'axe des ordonnées correspond à une amplitude. A chaque passage d'une pale devant le capteur 21 correspond une impulsion 25. L'écart temporel entre deux impulsions 25 correspond à une distance entre les sommets de deux pales voisines, ces deux grandeurs étant reliées par la vitesse de rotation de la roue aubagée.

La roue aubagée, ou le rotor qui l'entraîne en rotation, peut présenter un repère détectable par le capteur 21, de sorte qu'il est possible de discriminer les impulsions relatives à différents tours de roue. On peut également utiliser ce repère pour calibrer le signal temporel et relier des écarts temporels entre impulsions à des écarts angulaires. Sachant qu'il y a 360° entre deux détections successives du repère, on peut convertir des intervalles de temps en écarts angulaires. On peut également en déduire la vitesse de rotation de la roue aubagée. En variante, au lieu d'un repère sur la roue aubagée ou sur son rotor, on utilise une roue phonique agencée pour tourner à la même vitesse que la roue aubagée, et un compteur de tour qui détecte le passage d'un repère sur la roue phonique.

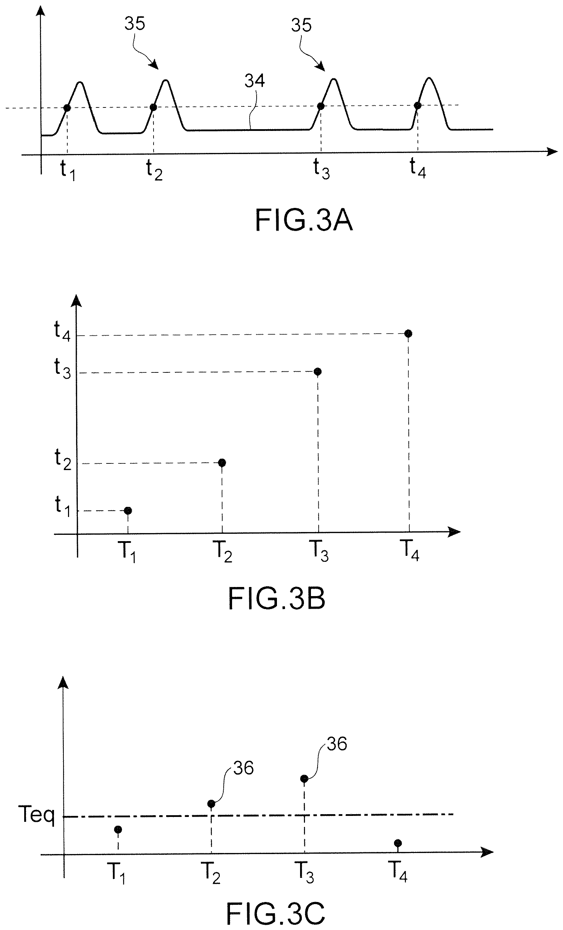

Les figures 3A à 3C illustrent la mesure d'une position d'équilibre d'une pale, à partir d'un signal temporel du type de celui représenté en figure 2B. Cette mesure met en œuvre, pour chaque pale, l'application d'un filtrage basse fréquence sur un signal temporel représentatif du mouvement effectué par la pale.

La figure 3A illustre un signal temporel 34, obtenu en synchronisant et combinant les signaux temporels acquis chacun par un capteur, et en sélectionnant uniquement les impulsions 35 relatives à l'une des pales. Les mesures effectuées par différents capteurs peuvent être réunies connaissant les positions des capteurs les uns par rapport aux autres.

On définit par exemple un passage de la pale devant le capteur, comme l'intersection entre un front montant d'une impulsion 35 avec une amplitude de référence constante. Aux quatre impulsions représentées en figure 3A correspondent ainsi les instants $t_1$, $t_2$, $t_3$ et $t_4$.

La figure 3B illustre un graphique dans lequel les temps absolus $t_1$, $t_2$, $t_3$ et $t_4$ sont représentés en fonction d'un temps réduit. Le temps réduit correspond au temps réduit par la vitesse de rotation de la roue aubagée. Il s'agit de corriger les mesures temporelles de l'effet d'une variation de la vitesse de rotation, d'un tour à l'autre de la roue aubagée. En particulier, on peut exprimer chaque $t_i$ en fonction d'un temps $T_i$ tel que $T_i = t_i * \dfrac{\Omega(t_i)}{\Omega_{ref}}$, où $\Omega_{ref}$ est une vitesse de rotation de référence, et $\Omega_i$ est la vitesse de rotation à l'instant $t_i$.

La figure 3C correspond à la figure 3B, dans laquelle les ordonnées des points sont corrigées de la rotation de la roue. Ici, chaque impulsion 35 de la figure 3A correspond à un tour de roue. Ainsi, chaque point de la figure 3B correspond à un tour de roue. On déduit de la vitesse de rotation de la roue, la durée pour que la roue tourne de 360°. On soustrait aux temps $t_1$, $t_2$, $t_3$ et $t_4$ les multiples adaptés de cette durée, de façon à s'affranchir de l'effet de la rotation de la roue sur les mesures $t_1$, $t_2$, $t_3$ et $t_4$.

On obtient ainsi une série de points 36 illustrant les diverses positions de la pale, prises à chacun des tours de la roue aubagée. Ces positions correspondent ici à des temps, mais on pourrait également exprimer ces positions par exemple en unités d'angles, ces deux notions étant liées par la vitesse de rotation de la roue aubagée. La position d'équilibre de la pale est définie par la valeur moyenne $T_{eq}$ entre ces différentes positions. Ces différentes positions peuvent définir un signal oscillatoire, représentatif du mouvement de la pale pendant la durée de mesure de ces positions. La position d'équilibre correspond à la composante continue (très basse fréquence) de ce signal oscillatoire. On peut obtenir la position d'équilibre à l'aide d'un simple filtrage passe-bas de ce signal oscillatoire.

La position d'équilibre peut être exprimée en unité de temps ou en unité d'angles. Par convention, une position d'équilibre est négative dans le sens de rotation de la roue, vu de l'avant de l'aéronef.

Selon l'invention, on ne cherche à mesurer que des valeurs moyennes de signal, et non à caractériser une oscillation, par exemple par sa fréquence. Un sous-échantillonnage du mouvement réellement effectué par la pale ne permet pas d'accéder à la fréquence de l'oscillation de la pale. En revanche, il peut permettre de définir la position d'équilibre de la pale. Un sous-échantillonnage du mouvement réellement effectué par la pale peut se traduire par un biais (décalage constant) entre la position d'équilibre réelle de la pale et la position d'équilibre mesurée. En comparant une position d'équilibre mesurée avec d'autres positions d'équilibre mesurées de la même manière, on peut s'affranchir de ce biais. Par exemple, on compare une position d'équilibre courante et une position d'équilibre initiale, ou on étudie l'évolution au cours des vols d'une position d'équilibre. Le procédé selon l'invention permet donc de détecter de façon fiable l'endommagement d'une pale, à l'aide d'un nombre réduit de capteurs, par exemple trois, voire même seulement deux ou même un seul capteur.

On peut remarquer que si l'on utilise un seul capteur, et qu'une pale vibre selon une fréquence de vibration égale à un multiple entier de la fréquence de rotation de la pale, le capteur détecte toujours la même position de la pale. On pourra cependant mesurer une position statique de la pale, qui sera modifiée en cas d'endommagement de la pale. Ainsi, il sera toujours possible de détecter un endommagement de la pale. Une telle détection serait impossible, dans les mêmes conditions, en utilisant la fréquence de vibration de la pale.

L'invention ne met pas en œuvre des traitements de données lourds : on peut se contenter d'acquérir un signal sous-échantillonné, et le principal traitement de données à effectuer est un simple filtrage passe-bas. L'invention offre donc un moyen de détection rapide et peu coûteux en termes de puissance de calcul embarqué de l'endommagement d'une pale.

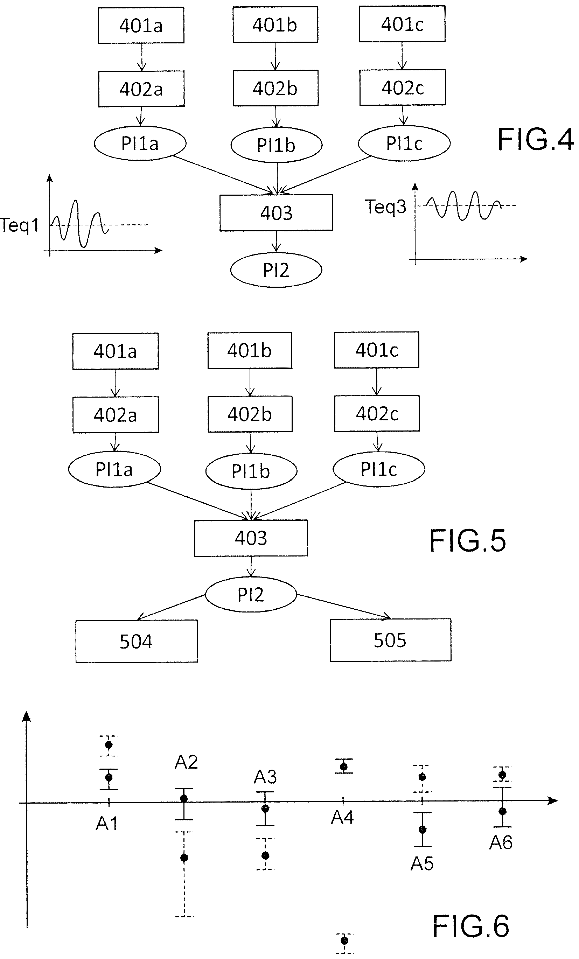

La figure 4 illustre de manière schématique un deuxième mode de réalisation du procédé selon l'invention.

On a illustré les étapes mises en œuvre pour une même phase de vol prédéterminée.

Les étapes 401a, 402a correspondent aux étapes 101 et 102 de la figure 1, mises en œuvre pour un premier vol. A l'issue de l'étape 402a, on obtient pour chaque pale la première position d'intérêt PI1a, correspondant à la position d'équilibre de la pale associée à ce premier vol et à ladite phase de vol prédéterminée. On a représenté en figure 4 le signal oscillatoire correspondant au mouvement d'une pale pendant ce premier vol et pour ladite phase de vol prédéterminée. La valeur moyenne de ce signal oscillatoire est $T_{eq1}$, ce qui correspond à la première position d'intérêt PI1a.

Les étapes 401b, 402b correspondent aux étapes 101 et 102 de la figure 1, mises en œuvre pour un deuxième vol. A l'issue de l'étape 402b, on obtient pour chaque pale la première position d'intérêt PI1b, correspondant à ce deuxième vol et à ladite phase de vol prédéterminée.

Les étapes 401c, 402c correspondent aux étapes 101 et 102 de la figure 1, mises en œuvre pour un troisième vol. A l'issue de l'étape 402c, on obtient pour chaque pale la première position d'intérêt PI1c, correspondant à ce troisième vol et à ladite phase de vol prédéterminée. On a représenté en figure 4 le signal oscillatoire correspondant au mouvement d'une pale pendant ce troisième vol et pour ladite phase de vol prédéterminée. La valeur moyenne de ce signal oscillatoire est $T_{eq3}$, ce qui correspond à la troisième position d'intérêt PI1c.

Le procédé comprend ensuite une étape 403 de calcul, pour chaque pale, de la valeur moyenne des premières positions d'intérêt précédemment mesurées. Cette valeur moyenne est nommée deuxième position d'intérêt PI2. On obtient donc, pour chaque pale, et pour ladite phase de vol prédéterminée, une valeur moyenne qui intègre les mesures associées à plusieurs vols précédents, pour fournir une valeur unique exploitable immédiatement.

En variante, on calcule la valeur médiane desdites premières positions d'intérêt.

Selon ce mode de réalisation, les différents vols considérés sont successifs, l'analyse étant par exemple réalisée tous les deux ou trois vols. Avantageusement, les vols considérés sont des vols consécutifs.

La figure 5 illustre de manière schématique un troisième mode de réalisation du procédé selon l'invention.

Le procédé illustré en figure 5 ne diffère du procédé illustré en figure 4 qu'en ce qu'il comprend des étapes supplémentaires utilisant la deuxième position d'intérêt PI2, relative à plusieurs vols et à une phase de vol prédéterminée.

Dans une étape 504, on compare, pour chaque pale et pour ladite phase de vol prédéterminée, la deuxième position d'intérêt PI2 et une position de référence associée à ladite pale.

Les positions de références utilisées pour chaque pale sont avantageusement les mêmes, quelle que soit la phase de vol considérée.

La position de référence associée à une pale peut être une valeur obtenue empiriquement, par exemple au cours d'un ou plusieurs vols en début de vie de la roue, lorsque l'on sait que la pale ne présente pas d'endommagement. On s'affranchit ainsi très facilement de l'effet d'un biais de mesure.

En variante, la position de référence associée à une pale peut être une valeur théorique, imposée au constructeur. Cette valeur théorique peut être corrigée d'un éventuel biais de mesure, afin de pouvoir être comparée avec des positions d'intérêt qui sont elles-mêmes mesurées.

Les positions de référence des pales correspondent de préférence à des pales équi-réparties angulairement sur 360°.

Lorsque la deuxième position d'intérêt PI2 et la position de référence présentent un écart supérieur à un seuil prédéterminé, on en déduit que la pale correspondante est endommagée.

Le seuil prédéterminé peut être obtenu par corrélation avec d'autres techniques connues de détection d'endommagement d'une pale, ou à partir de mesures sur des pales d'endommagement connu.

Le seuil prédéterminé est de préférence le même pour toutes les pales. Le seuil prédéterminé est de préférence le même pour toutes les phases de vol prédéterminées, où à tout le moins le même pour toutes les phases de vol qui sont favorables au suivi d'endommagement, à savoir celles où le chargement aérodynamique est le plus important et où les contraintes mécaniques exercées sur la structure des pales sont donc les plus importantes.

En fonction de l'écart entre la deuxième position d'intérêt PI2 et la position de référence, on peut quantifier l'endommagement de l'aube, par exemple à partir de données de calibration obtenues grâce à des mesures sur des pales d'endommagement connu ou par corrélation avec d'autres techniques connues pour quantifier un endommagement sur une pale.

En complément, ou en variante, à l'étape 505, on effectue un suivi, pour chaque pale et pour ladite phase de vol prédéterminée, des valeurs prises par la deuxième position d'intérêt PI2 au cours de plusieurs ensembles de vols. On peut ainsi repérer un décalage progressif de la valeur prise par la deuxième position d'intérêt PI2 au cours des vols. Ce décalage est représentatif de l'endommagement progressif de la pale. On repère par exemple une usure progressive de la pale.

Par exemple, lorsque la valeur prise par la deuxième position d'intérêt PI2 se décale de plus en plus dans un sens donné (en augmentant, respectivement en diminuant), on en déduit que la pale correspondante commence à montrer des signes d'usure. On peut ainsi prévoir une opération de maintenance avant que l'endommagement ne devienne réellement problématique.

Là-encore, on pourra se référer à des données de calibrages, obtenues sur des pales d'usure connue, pour relier un gradient des valeurs prises par la deuxième position d'intérêt PI2 avec l'apparition de signes d'usure sur la pale.

L'invention permet ainsi de détecter l'apparition d'un endommagement sur une pale, cette apparition pouvant être brutale ou progressive.

En variante, on ne considère pas des valeurs de positions d'équilibre moyennées sur plusieurs vols, mais des valeurs médianes de ces positions d'équilibre mesurées sur plusieurs ensembles de vols consécutifs.

Les étapes de comparaison d'une position d'intérêt à une position de référence, et/ou de suivi des valeurs prises par une position d'intérêt au cours des vols, peuvent également être mises en œuvre sur la première position d'intérêt PI1. Dans ce cas, on ne s'intéresse pas aux positions d'équilibre moyennes ou médianes d'un ensemble de plusieurs vols, mais aux positions d'équilibre à chaque vol d'une série de vols consécutifs qui permettent de réaliser le calcul d'une moyenne glissante.

La figure 6 illustre des mesures obtenues à l'aide d'un mode de réalisation avantageux du procédé selon l'invention.

L'axe des abscisses est gradué en indice de pale. On a ici représenté six pales indexées A1, A2, A3, A4, A5 et A6.

L'axe des ordonnées correspond à des positions d'équilibre. Il est gradué par exemple en unité d'angle. L'ordonnée nulle correspond aux positions des pales si elles étaient équi-réparties angulairement.

La figure 6 représente un diagramme en boîte dans lequel on a représenté, pour chaque pale et pour deux ensembles de vols, les premières positions d'équilibre associées à une phase de vol prédéterminée.

Pour chaque pale, un premier ensemble de dix vols est représenté par un segment en trait plein, et un deuxième ensemble de dix vols est représenté par un segment en trait pointillé. Les deux ensembles de vols ne sont pas consécutifs. Le premier ensemble de vols correspond au début de vie de la roue aubagée. Le deuxième ensemble de vols correspond au milieu de vie de la roue aubagée. Par exemple, plus de 1500 vols séparent le premier et le deuxième ensembles de vols.

Sur chaque segment, la valeur haute correspond à la valeur maximale des positions d'équilibre mesurées sur l'ensemble de vols, la valeur basse correspond à la valeur minimale de ces mêmes positions d'équilibre, et le point correspond à la valeur moyenne de ces mêmes positions d'équilibre.

Pour la pale A4, le segment en trait plein est très éloigné du segment en trait pointillé, ce qui traduit l'apparition d'un endommagement sur la pale A4 entre les deux ensembles de vols étudiés.

Pour la pale A2, le segment en pointillé est bien plus large que les autres segments de la figure 6. Cet étalement correspond à une perte de qualité des mesures. Si l'on retrouve cet étalement sur toutes les pales, on peut en déduire l'apparition d'un endommagement de la chaîne d'acquisition en sortie du capteur 21. On peut donc rechercher une anomalie de la chaîne d'acquisition en sortie d'un capteur, en mesurant, pour chaque pale, l'évolution de la dispersion des positions d'équilibre associées à une même phase de vol.

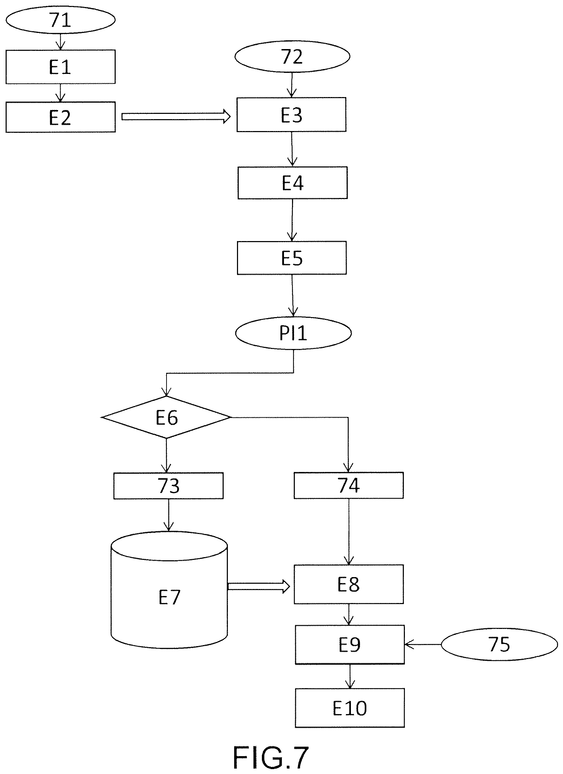

On va maintenant illustrer, à l'aide de la figure 7, un exemple détaillé du procédé selon l'invention.

Bien entendu, il ne s'agit que d'un exemple particulier et de nombreuses variantes peuvent être imaginées sans sortir du cadre de la présente invention.

On détaille à la figure 7 les étapes mises en œuvre au cours d'un vol particulier de l'aéronef. Les mêmes étapes sont répétées pour plusieurs vols d'une série de vols de l'aéronef. De préférence, à chaque vol, les mêmes étapes sont mises en œuvre pour plusieurs phases de vol prédéterminées.

A l'étape E1, on détermine au cours d'un vol d'un aéronef, à partir de données 71, la phase de vol dans laquelle se trouve l'aéronef. Les données 71 comprennent en particulier la vitesse de rotation de la roue aubagée surveillée.

A l'étape E2, on pilote l'enregistrement d'un signal 72, lorsque l'on détecte que l'aéronef se trouve dans une phase de vol prédéterminée selon l'invention. L'enregistrement du signal 72 correspond à l'étape E3.

Le signal 72 correspond à au moins une partie d'au moins un signal temporel, chaque signal temporel étant acquis par un capteur selon l'invention. Un tel capteur relève les instants de passage des sommets des pales de l'aéronef en un point prédéterminé.

L'étape E3 comprend également une mise en correspondance d'une partie de signal avec une phase de vol prédéterminée. En d'autres termes, chaque partie de signal est indexée pour être associée à une phase de vol prédéterminée.

A l'étape E4, le signal 72 est exploité pour en déduire, pour chaque pale et pour une phase de vol prédéterminée, une position d'équilibre dite élémentaire. Cette étape correspond à l'obtention d'une position d'équilibre telle que détaillée en référence aux figures 3A à 3C. Cette étape comprend notamment une mise en ordre de parties de signaux pour les juxtaposer par pale et par phase de vol, un passage en échelle de temps réduite de la vitesse de rotation, etc. Les parties de signaux peuvent provenir de différents capteurs.

L'enregistrement E3 du signal 72 est effectué pendant une durée de quelques secondes, par exemple 5 à 20 secondes, et répété plusieurs fois pendant une même phase de vol prédéterminée, par exemple 5 à 20 fois. Cette même phase de vol prédéterminée peut se produire plusieurs fois par vol. A chaque itération de l'étape E3 correspond une itération de l'étape E4, de sorte que l'on obtient, pour chaque pale et pour la phase de vol prédéterminée, plusieurs positions d'équilibre élémentaires.

De façon avantageuse, les plusieurs itérations des étapes E3 et E4 ne sont pas mises en œuvre consécutivement. En d'autres termes, on détermine que l'aéronef se trouve dans une première phase de vol et on calcule pour chaque pale une première position d'équilibre élémentaire. Un peu plus tard, on détecte que l'aéronef se trouve de nouveau dans la première phase de vol, et on calcule pour chaque pale une deuxième position d'équilibre élémentaire.

Selon une variante non représentée, on enregistre le signal temporel acquis par chaque capteur pendant toute la durée du vol, et on sélectionne ultérieurement des parties de signal utiles.

A l'étape E5, pour chaque pale et pour chaque phase de vol prédéterminée, on calcule une moyenne des plusieurs positions d'équilibre élémentaires ainsi obtenues. On obtient ainsi, pour chaque phase de vol prédéterminée et pour chaque pale, la position d'équilibre dite première position d'intérêt PI1. Il s'agit d'une valeur consolidée de position d'équilibre. On peut éventuellement éliminer à cette occasion des mesures de position d'équilibre qui semblent aberrantes car trop éloignées des autres mesures, pour la même pale, le même vol et la même phase de vol.

A l'étape E6, on détermine si l'on se trouve en configuration d'apprentissage 73, ou en configuration de détection 74.

Si l'on se trouve en configuration d'apprentissage 73, les premières positions d'intérêt PI1 sont stockées dans une base de données, au cours d'une étape de stockage E7. Elles pourront constituer les positions de référence associées chacune à une pale.

Si l'on se trouve en configuration de détection 74, l'étape E6 est suivie d'une étape E8 d'analyse et comparaison de données, en vue de déterminer, pour chaque pale, si elle présente un endommagement. L'étape E8 utilise les données stockées à l'étape E7. Il s'agit par exemple de comparer, pour chaque pale et pour chaque phase de vol prédéterminé, la position d'équilibre consolidée (première position d'intérêt) avec une position de référence. On obtient, à l'issue de l'étape E8, pour chaque pale et pour chaque phase de vol prédéterminée, une différence entre une position de référence et une première position d'intérêt.

A l'étape E9, pour chaque pale, on compare cette différence à un seuil prédéterminé 75 associé à ladite pale.

A l'étape E10, et lorsque cette différence est supérieure au seuil prédéterminé pour au moins une pale et au moins une phase de vol prédéterminée, on émet un signal d'alerte identifiant la pale et précisant le cas échéant l'ampleur de l'endommagement. Pour chaque pale, le seuil peut être le même quelle que soit la phase de vol. Les seuils peuvent être identiques pour toutes les pales.

Le signal d'alerte peut préciser si l'endommagement nécessite une réparation immédiate de la roue aubagée, ou si une étape de maintenance doit être prévue dans un délai fixé car la roue aubagée présente simplement des signes d'usure.

Afin de réduire les ressources matérielles devant être embarquées dans l'aéronef pour la mise en œuvre du procédé selon l'invention, les étapes E6 et suivantes peuvent être mises en œuvre au sol, après transmission à une base au sol des positions d'équilibre obtenues à l'étape E5. On peut également effectuer au sol les étapes E4 et E5. La dissociation bord sol est un choix de conception. Dans tous les cas, on cherchera à limiter le nombre de calculs réalisés en embarqué, la quantité de données à transmettre et la quantité de données à stocker en embarqué.

Les échanges de données peuvent s'effectuer lorsque l'aéronef est en vol et qu'un échange de données est possible avec le sol. En variante, l'ensemble des données acquises au cours d'un vol est stocké dans une mémoire qui est consultée par la base au sol lorsque l'aéronef est au sol, la mémoire étant ensuite vidée.

On va maintenant décrire rapidement quelques exemples de dispositifs pour mettre en œuvre un procédé selon l'invention.

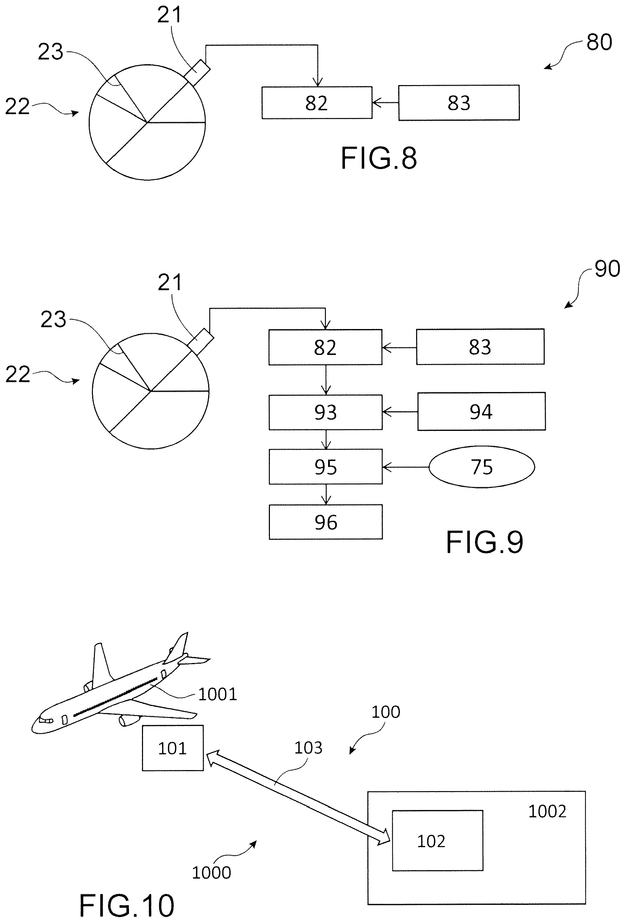

La figure 8 illustre de manière très schématique, un premier mode de réalisation d'un tel dispositif 80.

On reconnaît en figure 8 le capteur 21, la roue aubagée 22 et les pales 23 tels que décrits en référence à la figure 2A.

Le dispositif selon l'invention comprend des moyens 83 pour déterminer dans quelle phase de vol se trouve l'aéronef, par exemple à partir de la vitesse de rotation de la roue aubagée surveillée. Cette vitesse de rotation peut être obtenue grâce au capteur 21.

Des moyens de traitement du signal 82, tels qu'un calculateur ou un ordinateur, sont reliés au capteur 21 pour recevoir un signal temporel relatif à des instants de passage des sommets des pales 23 devant le capteur.

Les moyens 83 sont également reliés aux moyens de traitement du signal 82.

De préférence, les moyens de traitement du signal 82 sont agencés pour n'enregistrer le signal fourni par le capteur 21 qu'à des moments opportuns. Ces moments opportuns, ou plages temporelles d'intérêt, dépendent de la ou des phase(s) de vol prédéterminée(s) choisie(s) pour mettre en œuvre le procédé selon l'invention. Ces moments opportuns peuvent également dépendre d'une mise en œuvre d'une consolidation des mesures telle que définie en référence à la figure 7, à propos de l'étape E5. Des moyens d'interface homme-machine peuvent permettre à un opérateur humain de définir en amont la ou les phase(s) de vol prédéterminée(s).

En variante, les moyens de traitement du signal 82 reçoivent l'ensemble des signaux acquis par le capteur 21 tout au long de chaque vol, et comprennent des moyens de sélection de parties de signal associées à des plages d'intérêt.

Les moyens de traitement du signal 82 sont également agencés pour indexer un signal enregistré, de façon à l'associer à une phase de vol prédéterminée.

Les moyens de traitement du signal 82 sont agencés pour mesurer, pour chaque pale, et pour au moins une phase de vol prédéterminée, une position d'équilibre de la pale.

Les moyens 82 comprennent notamment des moyens de reconstruction, pour chaque vol, pour chaque pale et pour chaque phase de vol prédéterminée, d'un signal oscillatoire représentatif du mouvement de la pale, et des moyens de filtrage passe-bas de ce signal. Les moyens 82 mettent en œuvre en particulier un procédé tel que décrit en référence aux figures 3A à 3C. Le cas échéant, les moyens de traitement du signal 82 mettent en œuvre une consolidation des mesures de positions d'équilibre, comme décrit en référence à la figure 7 et à propos de l'étape E5.

Les moyens de traitement du signal 82 fournissent en sortie, pour le vol considéré, pour chaque pale et pour chaque phase de vol prédéterminée, la position d'équilibre dite première position d'intérêt. Les moyens de traitement 82 peuvent également fournir une liste de plusieurs positions d'équilibre des pales, chacune associée à un vol et à une phase de vol prédéterminées, ladite liste étant présentée sous la forme d'un diagramme en boîte tel qu'illustré en figure 6.

Les moyens de traitement du signal 82 peuvent comprendre des moyens de calcul d'une valeur moyenne ou médiane de différentes positions d'équilibre de chaque pale, pour une même phase de vol et pour plusieurs vols d'un ensemble de vols de l'aéronef. Les moyens de traitement du signal 82 peuvent alors fournir en sortie, pour l'ensemble de vols considérés, pour chaque pale et pour chaque phase de vol prédéterminée, cette valeur moyenne ou médiane dite deuxième position d'intérêt.

Les moyens de traitement du signal 82 peuvent être reliés à une mémoire (non représentée), agencée pour stocker les positions d'équilibre mesurées. On peut ainsi surveiller l'évolution des positions d'équilibre au cours des vols.

La figure 9 illustre de manière schématique un deuxième mode de réalisation du dispositif 90 selon l'invention. La figure 9 ne sera décrite que pour ses différences relativement à la figure 8.

Des moyens de comparaison 93 sont reliés en entrée aux moyens de traitement du signal 82, et à une base de données 94 stockant des positions de référence. Les moyens de comparaison 93 comparent, pour chaque pale et pour chaque phase de vol prédéterminée, la position d'intérêt (première ou deuxième) fournie par les moyens de traitement du signal, et une position de référence.

Les données stockées dans la base de données 94 peuvent être obtenues au cours d'une étape initiale d'apprentissage.

Les moyens de comparaison 93 fournissent en sortie, pour chaque pale et pour chaque phase de vol prédéterminée, une différence entre une position d'intérêt et une position de référence.

Des moyens de détection 95 reçoivent en entrée, cette différence, ainsi que le seuil 75 associé à ladite pale et à ladite phase de vol (voir figure 7). Les seuils peuvent être stockés dans une base de données dédiée, ou dans la base de données 94. Il peut s'agir du même seuil quelle que soit la pale et la phase de vol.

Des moyens d'alerte 96 sont agencés pour émettre un signal d'alerte lorsque cette différence est supérieure au seuil 75 pour au moins une pale et au moins une phase de vol. Les caractéristiques de ce signal d'alerte sont définies en référence à la figure 7, à propos de l'étape E10.

En variante ou en complément, le dispositif 90 peut comprendre des moyens pour calculer, pour chaque pale et pour chaque phase de vol, un gradient des positions d'intérêt prises par chaque pale au cours de plusieurs vols de l'aéronef. Ensuite, de façon similaire à ce qui est décrit à propos des moyens 95 et 96, le dispositif comprend des moyens de comparaison avec un seuil prédéterminé et des moyens d'émission d'un signal d'alerte lorsque ce gradient est supérieur au seuil prédéterminé pour au moins une pale et au moins une phase de vol.

On peut accompagner la mise en œuvre du procédé selon l'invention :

- d'un suivi du balourd sur la roue aubagée, pouvant confirmer un diagnostic de modification de la position d'une pale ; et/ou
- d'une détection d'endommagement d'une pale mettant en œuvre une détection par « tip timing » et analyse de fréquence, pouvant confirmer un diagnostic de modification de la position d'équilibre d'une pale en réponse à un choc.

La figure 10 illustre de manière schématique un troisième mode de réalisation du dispositif selon l'invention.

Le dispositif 100 selon ce troisième mode de réalisation se décompose en :

- un premier module 101, recevant au minimum le capteur et de préférence les moyens de détermination d'une phase de vol de l'aéronef; et
- un second module 102, recevant de préférence l'ensemble des moyens de traitement selon l'invention.

Le premier module est relié au second module par des moyens de communication symbolisés par la flèche 103. Il peut s'agit de moyens de communication sans fil, ou de moyens de communication filaires amovibles mis en place lorsque l'aéronef est au sol.

Les moyens de communication sans fil peuvent être des moyens de communication air-sol, utilisant par exemple le système de transmission de données ACARS (Aircraft Communication Addressing and Reporting System).

Le premier module est embarqué à bord d'un aéronef 1001, tandis que le second module se trouve sur une base au sol 1002. L'ensemble forme un système selon l'invention 1000, dans lequel un minimum d'éléments est embarqué à bord de l'aéronef afin d'optimiser le poids en vol, et surtout les ressources nécessaires à bord de l'aéronef en terme de puissance de calcul.

**Revendications**

1. Procédé de surveillance d'une roue aubagée (22) d'un moteur d'aéronef, comprenant :

   - une acquisition ($101_1$) d'au moins un signal temporel, chaque signal temporel étant relatif à des instants de passage des pales (23) de la roue aubagée devant un capteur (21) ; et
   - une détermination ($101_2$) d'une phase de vol courante de l'aéronef ;
   - pour chaque vol d'une série de vols de l'aéronef, mise en correspondance ($102_1$) d'au moins une partie de chaque signal temporel avec une phase de vol prédéterminée d'un ensemble de phases de vol prédéterminées comprenant au moins une phase de vol prédéterminée;

   **caractérisé en ce qu'**il comprend l'étape:

   - pour chaque pale (23), pour chaque vol de ladite série de vols de l'aéronef, et pour chaque phase de vol prédéterminée, mesure ($102_2$) d'une première position d'intérêt (PI1 ; PI1a ; PI1b ; PI1c) égale à la position moyenne (24C) du sommet de la pale, dite position d'équilibre, la position moyenne du sommet de la pale étant la position de ce point de la pale, moyennée temporellement.

2. Procédé de surveillance selon la revendication 1, **caractérisé par** une mesure (402a ; 402b ; 402c) d'une première position d'intérêt (PI1 ; PI1a ; PI1b ; PI1c) pour chaque pale, pour chaque vol, et pour au moins deux phases de vol prédéterminées.

3. Procédé de surveillance selon l'une quelconque des revendications 1 et 2, **caractérisé par** un calcul (403), pour chaque pale, et pour chaque phase de vol prédéterminée, d'une deuxième position d'intérêt (PI2) égale à la valeur moyenne ou la valeur médiane de positions d'équilibre (PI1a, PI1b, PI1c) associées chacune à un parmi plusieurs vols de l'aéronef.

4. Procédé de surveillance selon l'une quelconque des revendications 1 à 3, **caractérisé par** une comparaison (504) entre une position de référence et une position d'intérêt, afin de détecter l'apparition d'un endommagement sur la pale.

5. Procédé de surveillance selon l'une quelconque des revendications 1 à 4, **caractérisé par** un suivi (505) des positions d'intérêt au cours des vols, afin de détecter un décalage progressif de ces positions d'intérêt.

6. Procédé de surveillance selon l'une quelconque des revendications 1 à 5, **caractérisé en ce que** l'on mesure la position d'équilibre d'une pale à l'aide d'un unique capteur (21), agencé pour détecter le passage d'un sommet d'une pale de la roue aubagée en un point prédéterminé.

7. Procédé de surveillance selon l'une quelconque des revendications 1 à 6, **caractérisé par** une recherche d'une anomalie d'une chaîne d'acquisition de l'au moins un signal temporel, ladite recherche mettant en œuvre une mesure de l'écart entre les extrema d'un ensemble de positions d'équilibre (PI1a, PI1b, PI1c) associées à une même pale et une même phase de vol prédéterminée, les positions d'équilibre dudit ensemble correspondant chacune à un parmi plusieurs vols de l'aéronef.

8. Procédé de surveillance selon l'une des revendications 1 à 7, comprenant une étape préalable de détermination par expertise de l'ensemble de phases de vol prédéterminées, une phase de vol prédéterminée correspondant, au niveau de chaque pale, à une pression statique sur la pale et à une vitesse de rotation de cette pale qui induisent un mode de fonctionnement critique de la pale.

9. Dispositif de surveillance (80 ; 90 ; 100) d'une roue aubagée (22) d'un moteur d'aéronef, comprenant :

   - au moins un capteur (21), chaque capteur étant agencé pour acquérir un signal temporel relatif à des instants de passage des pales de la roue aubagée devant le capteur ; et
   - des moyens (83) de détermination d'une phase de vol courante de l'aéronef;
   - des moyens de traitement du signal (82), agencés pour :

      - mettre en correspondance au moins une partie de chaque signal temporel avec une phase de vol prédéterminée d'un ensemble de phases de vol prédéterminées comprenant au moins une phase de vol prédéterminée;

   **caractérisé en ce que** les moyens de traitement du signal sont aussi agencés pour:

      - mesurer, pour chaque pale, pour au moins un vol, et pour chaque phase de vol prédéterminée, une première position d'intérêt (PI1) égale à la position moyenne (24C) du sommet de la pale, dite position d'équilibre, la position moyenne du sommet de la pale étant la position de ce point de la pale, moyennée temporellement ; et
- fournir en sortie lesdites premières positions d'intérêt (PI1).

**10.** Dispositif de surveillance selon la revendication 9, **caractérisé en ce qu'**il comprend des moyens de calcul, pour chaque pale, et pour chaque phase de vol prédéterminée, d'une deuxième position d'intérêt (PI2) égale à la valeur moyenne ou la valeur médiane de positions d'équilibre (PI1a, PI1b, PI1c) associées chacune à un parmi plusieurs vols de l'aéronef.

**11.** Dispositif de surveillance (90 ; 100) selon l'une des revendications 9 et 10, **caractérisé en ce qu'**il comprend des moyens de comparaison (93) entre une position d'intérêt (PI1 ; PI2) et une position de référence.

**12.** Dispositif de surveillance selon l'une quelconque des revendications 9 à 11, **caractérisé en ce qu'**il comprend des moyens de calcul d'un gradient de positions d'intérêt (PI1 ; PI2) au cours des vols.

**13.** Dispositif de surveillance (80 ; 90 ; 100) selon l'une quelconque des revendications 9 à 12, **caractérisé en ce qu'**il comprend un unique capteur.

**14.** Dispositif de surveillance (100) selon l'une quelconque des revendications 9 à 13, **caractérisé en ce qu'**il comprend :

- un premier module (101) comprenant l'au moins un capteur (21), adapté à être embarqué à bord d'un aéronef (1001) ;
- un deuxième module (102) comprenant au moins une partie des moyens de traitement du signal (82), adapté à être installé sur une base au sol (1002) ; et
- des moyens de communication (103) entre le premier module et le second module.

**Patentansprüche**

**1.** Verfahren zur Überwachung eines Schaufelrades (22) eines Luftfahrzeug-Triebwerks, bestehend aus:

- einer Erfassung ($101_1$) mindestens eines Zeitsignals, wobei jedes Zeitsignal bezogen ist auf Zeitpunkte des Durchlaufens von Schaufelblättern (23) des Schaufelrades vor einem Sensor (21); und
- eine Bestimmung ($101_2$) einer aktuellen Flugphase des Luftfahrzeugs;
- bei jedem Flug in einer Reihe von Flügen des

Luftfahrzeugs Abgleich ($102_1$) mindestens eines Teils jedes Zeitsignals mit einer vorbestimmten Flugphase aus einer Gruppe von vorbestimmten Flugphasen, die mindestens eine vorbestimmte Flugphase enthält;

**dadurch gekennzeichnet,**
**dass** es den folgenden Verfahrensschritt enthält:

- für jedes Schaufelblatt (23), für jeden Flug in der genannten Reihe von Flügen des Luftfahrzeugs und für jede vorbestimmte Flugphase Messung ($102_2$) einer ersten vorteilhaften Position (PI1; PI1a; PI1b; PI1c), die gleich der Mittelposition (24C) der Spitze des Schaufelblatts ist, Gleichgewichtsposition genannt, wobei die Mittelposition der Spitze des Schaufelblatts die Position dieser Stelle des Schaufelblatts ist, die zeitlich gemittelt wurde.

**2.** Verfahren zur Überwachung nach Anspruch 1, **gekennzeichnet durch** eine Messung (402a; 402b; 402c) einer ersten vorteilhaften Position (PI1; PIIa; PI1b; PI1c) für jedes Schaufelblatt, für jeden Flug und für mindestens zwei vorbestimmte Flugphasen.

**3.** Verfahren zur Überwachung nach einem der Ansprüche 1 und 2, **gekennzeichnet durch** eine Berechnung (403) einer zweiten vorteilhaften Position (PI2), die gleich dem Mittelwert oder dem Medianwert von Gleichgewichtspositionen (PI1a; PI1b; PI1c) ist, die jeweils einem von mehreren Flügen des Luftfahrzeugs zugeordnet sind, und zwar eine Berechnung für jedes Schaufelblatt und für jede vorbestimmte Flugphase.

**4.** Verfahren zur Überwachung nach einem der Ansprüche 1 bis 3, **gekennzeichnet durch** einen Vergleich (504) zwischen einer Bezugsposition und einer vorteilhaften Position, um das Auftreten einer Beschädigung an dem Schaufelblatt zu erkennen.

**5.** Verfahren zur Überwachung nach einem der Ansprüche 1 bis 4, **gekennzeichnet durch** eine Abfolge (505) der vorteilhaften Positionen während der Flüge, um eine fortschreitende Verschiebung dieser vorteilhaften Positionen zu erkennen.

**6.** Verfahren zur Überwachung nach einem der Ansprüche 1 bis 5, **dadurch gekennzeichnet,**
**dass** die Gleichgewichtsposition eines Schaufelblatts mit Hilfe eines einzigen Sensors (21) gemessen wird, der angeordnet wird, um das Durchlaufen einer Spitze eines Schaufelblatts des Schaufelrades an einem vorbestimmten Punkt zu erkennen.

**7.** Verfahren zur Überwachung nach einem der Ansprüche 1 bis 6,
**gekennzeichnet durch** eine Störungssuche in einer Erfassungs-Reihe des mindestens einen Zeitsignals, wobei bei dieser Suche eine Messung der Differenz zwischen den Extrema einer Gruppe von Gleichgewichtspositionen (PI1a; PI1b; PI1c), die einem und demselben Schaufelblatt und einer und derselben vorbestimmten Flugphase zugeordnet sind, durchgeführt wird, wobei die Gleichgewichtspositionen der genannten Gruppe jeweils einem von mehreren Flügen des Luftfahrzeugs entsprechen.

**8.** Verfahren zur Überwachung nach einem der Ansprüche 1 bis 7, welches einen vorausgehenden Verfahrensschritt der durch Untersuchung erfolgenden Bestimmung der Gruppe von vorbestimmten Flugphasen enthält, wobei eine vorbestimmte Flugphase für jedes Schaufelblatt einem statischen Druck auf das Schaufelblatt und einer Drehgeschwindigkeit dieses Schaufelblatts entspricht, die eine kritische Betriebsweise des Schaufelblatts bedeuten.

**9.** Vorrichtung zur Überwachung (80; 90; 100) eines Schaufelrades (22) eines Luftfahrzeug-Triebwerks, welche umfasst:

- mindestens einen Sensor (21), wobei jeder Sensor vorgesehen ist, um ein Zeitsignal zu erfassen, das bezogen ist auf Zeitpunkte des Durchlaufens von Schaufelblättern des Schaufelrades vor dem Sensor; und
- Mittel (83) zur Bestimmung einer aktuellen Flugphase des Luftfahrzeugs;
- Mittel zur Verarbeitung des Signals (82), die vorgesehen sind, um

- mindestens einen Teil jedes Zeitsignals mit einer vorbestimmten Flugphase aus einer Gruppe von vorbestimmten Flugphasen, die mindestens eine vorbestimmte Flugphase enthält, abzugleichen;

**dadurch gekennzeichnet,**
**dass** die Mittel zur Verarbeitung des Signals auch vorgesehen sind, um

- für jedes Schaufelblatt, für jeden Flug und für jede vorbestimmte Flugphase eine erste vorteilhafte Position (PI1) zu messen, die gleich der Mittelposition (24C) der Spitze des Schaufelblatts ist, Gleichgewichtsposition genannt, wobei die Mittelposition der Spitze des Schaufelblatts die Position dieser Stelle des Schaufelblatts ist, die zeitlich gemittelt wurde; und
- die genannten ersten vorteilhaften Positionen (PI1) auszugeben.

**10.** Vorrichtung zur Überwachung nach Anspruch 9,
**dadurch gekennzeichnet,**
**dass** sie Mittel zur Berechnung einer zweiten vorteilhaften Position (PI2), die gleich dem Mittelwert oder dem Medianwert von Gleichgewichtspositionen (PI1a; PI1b; PI1c) ist, die jeweils einem von mehreren Flügen des Luftfahrzeugs zugeordnet sind, und zwar Mittel zur Berechnung für jedes Schaufelblatt und für jede vorbestimmte Flugphase aufweist.

**11.** Vorrichtung zur Überwachung (90; 100) nach einem der Ansprüche 9 und 10,
**dadurch gekennzeichnet,**
**dass** sie Mittel des Vergleichs (93) zwischen einer vorteilhaften Position (PI1; PI2) und einer Bezugsposition aufweist.

**12.** Vorrichtung zur Überwachung nach einem der Ansprüche 9 bis 11,
**dadurch gekennzeichnet,**
**dass** sie Mittel zur Berechnung eines Gradienten von vorteilhaften Positionen (PI1; PI2) während der Flüge aufweist.

**13.** Vorrichtung zur Überwachung (80; 90; 100) nach einem der Ansprüche 9 bis 12,
**dadurch gekennzeichnet,**
**dass** sie einen einzigen Sensor aufweist.

**14.** Vorrichtung zur Überwachung (100) nach einem der Ansprüche 9 bis 13,
**dadurch gekennzeichnet,**
**dass** sie aufweist:

- ein erstes Modul (101), das den mindestens einen Sensor (21) enthält, und das geeignet ist, an Bord eines Luftfahrzeugs (1001) untergebracht zu werden;
- ein zweites Modul (102), das mindestens einen Teil der Mittel zur Verarbeitung des Signals (82) enthält, und das geeignet ist, in einer Base am Boden (1002) installiert zu werden; und
- Mittel zur Kommunikation (103) zwischen dem ersten Modul und dem zweiten Modul.

**Claims**

**1.** A method for monitoring a vane wheel (22) of an aircraft engine, comprising:

- acquiring ($101_1$) at least one time signal, each time signal relating to passage time instants of the blades (23) of the vane wheel in front of a sensor (21); and
- determining ($101_2$) a current flight phase of the aircraft;
- for each flight of the flight series of the aircraft, mapping ($102_1$) at least one part of each time signal with a predetermined flight phase of a set of predetermined flight phases comprising at least one predetermined flight phase; **characterised in that** it comprises the step of:

- for each blade (23), for each flight of said flight series of the aircraft, and for each predetermined flight phase, measuring ($102_2$) a first position of interest (PI1; PI1a; PI1b; PI1c) equal to the average position (24C) of the apex of the blade, called a balance position, the average position of the apex of the blade being the temporally averaged position of this point of the blade.

2. The monitoring method according to claim 1, **characterised by** measuring (402a; 402b; 402c) a first position of interest (PI1; PI1a; PI1b; PI1c) for each blade, for each flight, and for at least two predetermined flight phases.

3. The monitoring method according to any of claims 1 and 2, **characterised by** calculating (403), for each blade, and for each predetermined flight phase, a second position of interest (PI2) equal to the average value or to the median value of balance positions (PI1a, PI1b, PI1c) each associated with one among several flights of the aircraft.

4. The monitoring method according to any of claims 1 to 3, **characterised by** comparing (504) a reference position with a position of interest, in order to detect the occurrence of damage to the blade.

5. The monitoring method according to any of claims 1 to 4, **characterised by** tracking (505) the positions of interest during the flights, in order to detect a gradual offset of these positions of interest.

6. The monitoring method according to any of claims 1 to 5, **characterised in that** the balance position of a blade is measured using a single sensor (21), arranged to detect the passage of an apex of a blade of the vane wheel at a predetermined point.

7. The monitoring method according to any of claims 1 to 6, **characterised by** searching for an anomaly of a string of acquiring the at least one time signal, said search implementing measuring the deviation between the extrema of the set of balance positions (PI1a, PI1b, PI1c) associated with a same blade and a same predetermined flight phase, the balance positions of said set each corresponding to one among several flights of the aircraft.

8. The monitoring method according to one of claims 1 to 7, comprising a prior step of determining by an expert assessment of the set of predetermined flight phases, a predetermined flight phase corresponding, at each blade, to a static pressure on the blade and to a rotation speed of this blade which induce a critical operating mode of the blade.

9. A device for monitoring (80; 90; 100) a vane wheel (22) of an aircraft engine, comprising:

- at least one sensor (21), each sensor being arranged to acquire a time signal relating to passage time instants of the blades of the vane wheel in front of the sensor; and
- means (83) for determining a current flight phase of the aircraft;
- signal processing means (82), arranged to:

- map at least one part of each time signal with a predetermined flight phase of a set of predetermined flight phases comprising at least one predetermined flight phase;

**characterised in that** the signal processing means are also arranged to:

- measure, for each blade for, at least one flight, and for each predetermined flight phase, a first position of interest (PI1) equal to the average position (24C) of the apex of the blade, called a balance position, the average position of the apex of the blade being the temporally averaged position of this point of the blade; and
- output said first positions of interest (PI1).

10. The monitoring device according to claim 9, **characterised in that** it comprises means for calculating, for each blade, and for each predetermined flight phase, a second position of interest (PI2) equal to the average value or the median value of balance positions (PI1a, PI1b, PI1c) each associated with one among several flights of the aircraft.

11. The monitoring device (90; 100) according to one of claims 9 and 10, **characterised in that** it comprises means for comparing (93) a position of interest (PI1; PI2) with a reference position.

12. The monitoring device according to any of claims 9 to 11, **characterised in that** it comprises means for calculating a gradient of positions of interest (PI1; PI2) during the flights.

13. The monitoring device (80; 90; 100) according to any of claims 9 to 12, **characterised in that** it comprises a single sensor.

**14.** The monitoring device (100) according to any of claims 9 to 13, **characterised in that** it comprises:

- a first module (101) comprising the at least one sensor (21), adapted to be onboard an aircraft (1001);
- a second module (102) comprising at least one part of the signal processing means (82), adapted to be set on a ground station (10002); and
- means for communicating (103) the first module with the second module.

FIG.1

FIG.2A

FIG.2B

FIG.3A

FIG.3B

FIG.3C

FIG.4

FIG.5

FIG.6

FIG.7

FIG.8

FIG.9

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2485891 A